# EUROPÄISCHE PATENTANMELDUNG

(11) **EP 0 868 103 A2**
(43) Veröffentlichungstag der Anmeldung: **30.09.1998**
(21) Anmeldenummer: 98103826.8
(22) Anmeldetag: 04.03.1998
(51) Int. Cl.: H04Q 11/04

(54) **Annahme von Verbindungen niedriger Priorität, insbesondere non-real-time (NRT)-Verkehr, von nur einem redundanter Übertragungswege**

(30) Priorität: 27.03.1997 DE 19713062
(71) Anmelder: SIEMENS AKTIENGESELLSCHAFT, 80333 München (DE)
(72) Erfinder: Rau, Peter, Dr., 81241 München (DE)

(57) **Zusammenfassung**

In einem Übertragungssystem, in dem nach dem ATM (Asynchronous Transfer Mode) Übertragungsverfahren im Zuge von virtuellen Verbindungen weitergeleitete, redundante Nachrichtenzellen jeweils über redundante Übertragungswege übertragen werden, ist auf den Übertragungswegen zur Formung des Gesamtverkehrsaufkommens ein Verwerfen von Nachrichtenzellen, die einer Verbindung niedriger Priorität zugehören, zulässig. Zur Vermeidung einer Überlast nach der Rekombination der über die redundanten Übertragungswege übertragenen Nachrichtenzellenströme werden die Nachrichtenzellen einer Verbindung niedriger Priorität von nur einem Übertragungsweg angenommen. Ein Auswahlkennungszeichen legt für mehrere Verbindungen niedriger Priorität fest von welchem Übertragungsweg die diesen Verbindungen zugehörigen Nachrichtenzellen angenommen werden.

## Beschreibung

Bei der ATM (Asynchronous Transfer Mode)- Übertragung ist die Reihenfolge der Nachrichtenzellen, die einer virtuellen Verbindung zugehören, einzuhalten. Zur Einhaltung einer vorgegebenen Verlustwahrscheinlichkeit kann eine parallele Weiterleitung, Durchschaltung über redundante Übertragungswege erforderlich sein. In der Empfangseinrichtung wird unter den redundant übertragenen Nachrichtenzellen nur eine in der Reihenfolge als nächste erwartete Nachrichtenzelle ausgewählt. Zur Bezeichnung der Reihenfolge führen die Nachrichtenzellen eine zyklisch fortlaufend vergebene Folgenummer in einem Feld für die Folgenummer mit sich. Die voneinander unterscheidbaren Folgenummern einer virtuellen Verbindung legen einen Nachrichtenzellen-Folgezyklus fest.

Die redundanten Übertragungswege können jeweils eine Statistische Multiplexer Einheit aufweisen, die unter Einsatz großer Pufferspeicher den Verkehr von Verbindungen niedriger Priorität so formen soll, daß der Gesamtverkehr die Ausgangsleitung optimal, d. h. zu annähernd 100% auslastet.

Die Statistischen Multiplexer Einheiten der Koppelfeldscheiben arbeiten unabhängig voneinander, wodurch Nachrichtenzellenströme unterschiedlichen Inhalts entstehen können.

Wird in der Empfangseinrichtung am Ende der redundanten Übertragungswege ein einfacher Rekombinations-Algorithmus angewendet, werden die auf einem Übertragungsweg aus Überlastgründen verworfenen Nachrichtenzellen durch redundante, auf einem anderen Übertragungsweg übertragene Nachrichtenzellen ersetzt, was zu einer Last von größer 100 % und damit zu einem Überlaufen des RPC Puffers am Ausgang der Ausgangseinrichtung führt.

In der Empfangseinrichtung könnte für die Verbindungen niedriger Priorität jeweils ein Auswahlkennungszeichen eingetragen sein, das den Übertragungsweg festlegt, von dem ausschließlich Nachrichtenzellen der betreffenden Verbindung zur Weiterbehandlung angenommen werden. Bei Ausfall eines Übertragungsweges müßte der Boardcontroller sämtliche betroffenen Einträge umschreiben, was bei bis zu 8192 Verbindungen mehrere Sekunden dauern würde und woran sich zur Vermeidung einer unerwünschten Mischung der Nachrichtenzellenströme der niederprioren Verbindungen der an der Umschaltung beteiligten Übertragungswege ein Nachrichtenzellen-Folgezyklus anschließen müßte, während dem von den an der Umschaltung beteiligten Übertragungswegen keine Nachrichtenzellen zur Weiterbehandlung angenommen würden.

Dem Anmeldungsgegenstand liegt das Problem zugrunde, für ein Übertragungssystem, in dem über redundante Übertragungswege redundant übertragene Nachrichtenzellen auf den Übertragungswegen unabhängig voneinander verworfen werden, ein Verfahren anzugeben, das eine Umschaltung vom Empfang von nur einem ersten Übertragungsweg auf einen Empfang von nur einem zweiten Übertragungsweg mit erheblich verringertem Zeitbedarf mit sich bringt.

Das Problem wird durch die Merkmale des Anspruchs 1 gelöst.

Das anmeldungsgemäße Verfahren bringt neben einer Vereinfachung der Umschaltung, die dadurch gegeben ist, daß für mehrere Verbindungen nur das Auswahlkennungszeichen umzuändern ist, eine erhebliche Verkürzung des Zeitbedarfs für die Umschaltung mit sich, was den durch die Umschaltung bedingten Verlust von Nachrichtenzellen entsprechend verringert.

Eine besondere Weiterbildung des Anmeldungsgegenstandes ist dadurch gegeben, daß das Kennzeichnungsbit in jeder Nachrichtenzelle einer Verbindung nachrangiger Priorität mitgeführt wird. Diese Maßnahme bringt eine aufwandarme Unterscheidbarkeit zwischen Nachrichtenzellen unterschiedlicher Priorität mit sich.

Eine besondere Weiterbildung des Anmeldungsgegenstandes ist dadurch gegeben, daß bei Empfang einer Nachrichtenzelle ein jeweiliges für die Verbindungen abgelegtes Kennzeichnungsbit ausgewertet wird. Diese Maßnahme, bei der im Zuge des Aufbaus einer Verbindung ein Eintrag in der Ausgangseinrichtung erfolgt, bringt neben dem Vorteil, daß keine Veränderung an den Nachrichtenzellen einer Prioritätsklasse erforderlich ist, den Vorteil mit sich, daß der Eintrag für sämtliche Nachrichtenzellen der betreffenden Verbindung gilt.

Eine besondere Weiterbildung des Anmeldungsgegenstandes ist dadurch gegeben, daß das Auswahlzustandszeichen wirksamschaltbar bzw. deaktivierbar ist. Diese Maßnahme bringt eine einfache Möglichkeit zum Wechsel zwischen einem Betrieb über nur einen Übertragungsweg und einem Betrieb über redundante Übertragungswege.

Eine besondere Weiterbildung des Anmeldungsgegenstandes ist dadurch gegeben, daß mit der Umschaltung von einem Übertragungsweg auf einen anderen Übertragungsweg die Annahme von Nachrichtenzellen für eine fest vorgegebene Zeitdauer ausgesetzt wird. Diese Maßnahme verhindert durch das Umschalten bedingte Wiederholungen von Nachrichtenzellen oder Überlast am Ausgang.

Eine besondere Weiterbildung des Anmeldungsgegenstandes ist dadurch gegeben, daß mit der Umschaltung von einem Übertragungsweg die Annahme von Nachrichtenzellen entsprechend einem in der prioritätsgleichen Patentanmeldung der Anmelderin mit dem Titel "Redundantes Übertragungssystem mit Vermeidung von Zellwiederholungen" beschriebenen Algorithmus mit Sperrfenster erfolgt, um Zellwiederholungen zu verhindern.

Der Anmeldungsgegenstand wird im Folgenden als Ausführungsbeispiel in einem zum Verständnis erforderlichen Umfang anhand von Figuren näher beschrieben. Dabei zeigen:
- Figur 1: eine schematische Darstellung einer Vermittlungseinrichtung, die nach einem asynchronen Übertragungsverfahren weitergeleitete Nachrichtenzellen über redundante Übertragungswege durchschaltet
- Figur 2: eine prinzipielle Darstellung einer Nachrichtenzelle
- Figur 3: eine prinzipielle Darstellung eines Umschaltvorgangs mit Pause.

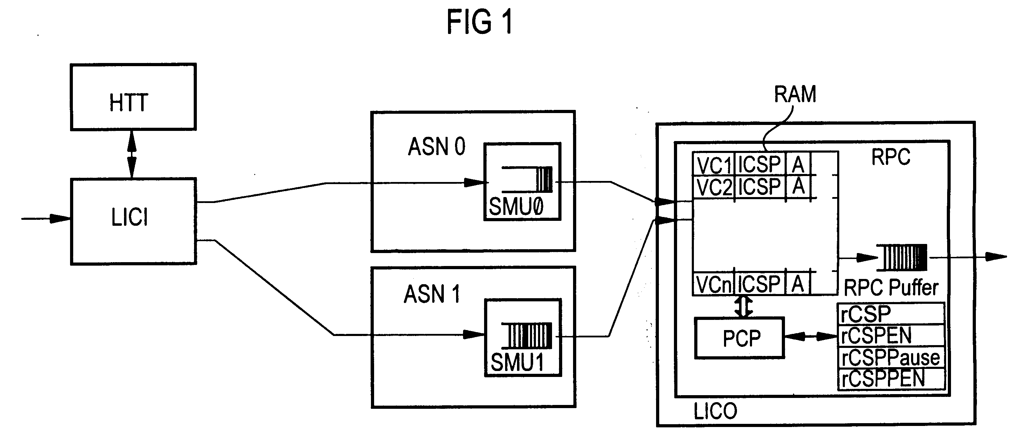

Die in Figur 1 dargestellte Vermittlungseinrichtung weist eingangsseitig eine Eingangseinrichtung LICI (für: Line Interface Circuit Input) auf, der im Zuge von virtuellen Verbindungen nach einem asynchronen Übertragungsverfahren, insbesondere dem ATM (Asynchronous Transfer Mode)-Verfahren übertragene Nachrichtenzellen zugeführt sind. Es können beispielsweise 8192 virtuelle Verbindungen gegeben sein.

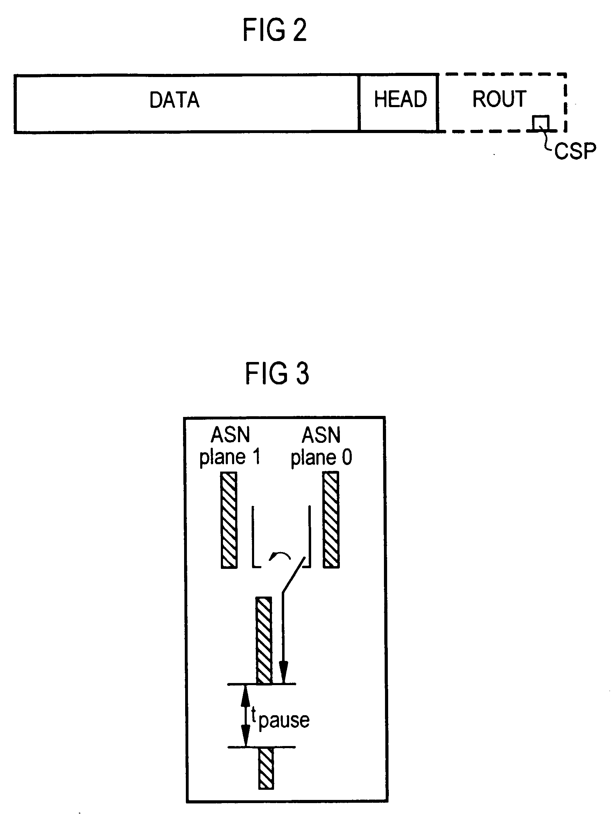

Eine in Figur 2 dargestellte Nachrichtenzelle weist eine feste Länge auf und ist mit einem Nutzdatenteil DATA und einem diesem vorangestellten Nachrichtenzellenkopf HEAD gebildet. Der Nutzdatenteil möge 48 Byte und der Nachrichtenzellenkopf möge 5 Byte Länge aufweisen. Der Nachrichtenzellenkopf weist eine Zielinformation VPI (Virtual Path Identifier) /VCI (Virtual Channel Identifier) auf, die die Nachrichtenzelle als einer virtuellen Verbindung zugehörig und die den Empfänger angibt. Bei Ankunft einer Nachrichtenzelle in der Eingangseinrichtung wird die Zielinformation der Nachrichtenzelle einer Umwerteeinrichtung HTT (für: Header Translation Table) zugeführt, die nach Maßgabe der Zielinformation ein Beifügen einer Durchschalteinformation ROUT (für: Routing) zu der Nachrichtenzelle bewirkt. Die Durchschalteinformation gibt den Ausgang der Vermittlungseinrichtung an, zu dem die Nachrichtenzelle über eine Koppelfeldscheibe ASN (für: Asynchronous Switching Network) durchgeschaltet werden soll. Zur Einhaltung einer vorgegebenen Verlustwahrscheinlichkeit von beispielsweise 10-9 kann eine parallele Durchschaltung über redundante Koppelfeldscheiben erforderlich sein. Die Vermittlungseinrichtung weist zwei zueinander redundante Koppelfeldscheiben ASN0, ASN1 auf, die redundante Übertragungswege bilden. In der Eingangseinrichtung erfolgt eine Vermehrfachung der Nachrichtenzellen entsprechend der Anzahl der Koppelfeldscheiben, im Ausführungsbeispiel eine Verdoppelung, zu einer Gruppe von Nachrichtenzellen gleichen Inhalts. Eine Nachrichtenzelle weist eine Folgenummer auf, die für aufeinanderfolgende, einer virtuellen Verbindung zugehörigen Nachrichtenzellen zyklisch fortlaufend zugeteilt ist. Die voneinander unterscheidbaren Folgenummern einer virtuellen Verbindung legen einen Nachrichtenzellen-Folgezyklus fest. Die Nachrichtenzellen einer Gruppe weisen dieselbe Folgenummer auf. Über die redundanten Koppelfeldscheiben wird jeweils eine Nachrichtenzelle aus einer Gruppe von Nachrichtenzellen zu dem betreffenden Ausgang durchgeschaltet.

Die redundanten Koppelfeldscheiben weisen jeweils eine Statistische Multiplexer Einheit SMU0, SMU1 (für: Statistical Multiplexer Unit) auf. Eine Statistische Multiplexer Einheit soll mit Hilfe großer, als verbindungsspezifische First-In-First-Out organisierter Pufferspeicher den Verkehr von NRT(für: non-real-time)-Verbindungen ohne Echtzeitanforderung so formen, daß die Ausgangsleitung optimal, d. h. zu annähernd 100% ausgelastet wird. Bei den Verbindungen ohne Echtzeitanforderung handelt es um Verkehr niedrigerer Priorität gegenüber Verkehr von RT(für: real time)-Verbindungen mit Echtzeitanforderung. Bei den NRT(für: non-real-time)-Verbindungen ohne Echtzeitanforderung, wie z. B. Verbindungen mit nicht festgelegter Nachrichtenzellenrate sogenannte UBR(für: Undefined Bit Rate)- oder Verbindungen mit einer Nachrichtenzellenrate, die gerade zur Verfügung steht, sogenannte ABR(für: Available Bit Rate)- Verbindungen, ist ein Verwerfen von Nachrichtenzellen zulässig.

Die Statistischen Multiplexer Einheiten der Koppelfeldscheiben arbeiten nicht synchronisiert unabhängig voneinander. Insbesondere bei auftretender Überlast werden bei Anwendung eines als Early Packet Discard EPD bekannt gewordenen Verfahrens oder eines als Partially Packet Discard PPD bekannt gewordenen Verfahrens in den Koppelfeldscheiben Nachrichtenzellen von unterschiedlichen Verbindungen ohne Echtzeitanforderung verworfen, wodurch Nachrichtenzellenströme unterschiedlichen Inhalts entstehen.

Die von den redundanten Koppelfeldscheiben abgegebenen Nachrichtenzellen werden von einer Ausgangseinrichtung LICO (für: Line Interface Circuit Output) empfangen. In der Ausgangseinrichtung werden die empfangenen Nachrichtenzellen auf Fehlerhaftigkeit überprüft. Dies kann durch Überprüfung von Paritätsbits gegeben sein. Als fehlerhaft festgestellte Nachrichtenzellen werden verworfen. Die Ausgangseinrichtung weist eine Auswahleinrichtung RPC (für: Redundant Path Combination) auf, die aus einer Gruppe von als fehlerfrei empfangenen Nachrichtenzellen nur eine Nachrichtenzelle auswählt und weiterbehandelt` Die Weiterbehandlung mag durch eine Weiterleitung über einen RPC Puffer und eine Leitung zu einer entfernt angeordneten Einrichtung gegeben sein.

Bei der Weiterleitung von Nachrichtenzellen nach dem ATM-Übertragungsverfahren ist für eine virtuelle Verbindung die Reihenfolge der Nachrichtenzellen einzuhalten.

Die Auswahleinrichtung weist eine Speichereinrichtung mit wahlfreiem Zugriff RAM (für: random access memory) auf, die für jede Verbindung VC1, VC2, ..,VCn eine Speicherzeile aufweist. In der Speicherzeile ist ein in der Figur nicht dargestellter Platz zur Abspeicherung der Folgenummer der für die betreffende virtuelle Verbindung zuletzt weitergeleiteten Nachrichtenzelle reserviert. Weiter ist in der Speicherzeile für jede Verbindung ein Speicherplatz A reserviert, der den Übertragungsweg bezeichnet, über den die zuletzt zur Weiterleitung ausgewählte Nachrichtenzelle der betreffenden Verbindung übertragen wurde.

In der Auswahleinrichtung wird überprüft, ob eine ankommende Nachrichtenzelle diejenige ist, die für die betreffende virtuelle Verbindung die auf die zuletzt weitergeleitete Nachrichtenzelle nächstfolgend weiterzuleitende ist. Dazu wertet ein Rekombinations-Algorithmus die in der Speicherzeile für die betreffende virtuelle Verbindung abgespeicherte Folgenummer und den Inhalt des Speicherplatzes A aus. Die Ermittlung der nächstfolgenden Nachrichtenzelle kann vorteilhafterweise dadurch erfolgen, daß die abgespeicherte Folgenummer der zuletzt weitergeleiteten Nachrichtenzelle inkrementiert wird und die Folgenummer einer gerade durchgeschalteten Nachrichtenzelle mit der inkrementierten Folgenummer verglichen wird. Dabei beschränkt sich die Ermittlung der nächstfolgenden Nachrichtenzelle auf einen in einfacher Weise durchzuführenden Vergleich der Folgenummern.

Im Allgemeinen wird die als erste in der Ausgangseinrichtung ankommende Nachrichtenzelle einer Gruppe von Nachrichtenzellen weitergeleitet. Eine Nachrichtenzelle, die später in der Auswahleinrichtung ankommt als eine zur selben Gruppe gehörige Nachrichtenzelle, die zuvor zur Weiterleitung ausgewählt ist, wird verworfen. Besondere Rekombinations-Algorithmen zur Bestimmung der für eine virtuelle Verbindung jeweils nächsten weiterzuleitenden Nachrichtenzelle sind beispielsweise aus der EP-0 384 936, EP-0 453 606 oder EP-0 453 607 bekannt.

Im übrigen kann durch fortlaufende Auswertung des Inhalts des Speicherplatzes A beispielsweise mit Hilfe eines gesonderten Algorithmus' eine hier nicht näher dargelegte Bestimmung der Fehlerrate eines Übertragungsweges erfolgen.

Wird der Rekombinations-Algorithmus für die Rekombination von RT-Verbindungen mit Echtzeitanforderung auch für NRT-Verbindungen ohne Echtzeitanforderung angewendet, werden die auf einem Übertragungsweg aus Überlastgründen verworfenen Nachrichtenzellen durch redundante, auf einem anderen Übertragungsweg übertragene Nachrichtenzellen ersetzt, was zu einer Last von größer 100 % und damit zu einem Überlaufen des RPC Puffers am Ausgang der Ausgangseinrichtung führt.

Anmeldungsgemäß ist vorgesehen, daß die NRT-Verbindungen ohne Echtzeitanforderung von den RT-Verbindungen mit Echtzeitanforderung durch Kennzeichnungszeichen unterscheidbar sind. Dies kann beispielsweise, wie in Figur 2 dargestellt, durch in der Durchschalteinformation ROUT der Nachrichtenzellen von NRT-Verbindungen ohne Echtzeitanforderung mitgeführten Kennzeichnungszeichen CSP (für: Conditional Single Plane) erfolgen. Im Ausführungsbeispiel ist vorgesehen, daß in der Speicherzeile für NRT-Verbindungen ohne Echtzeitanforderung ein jeweiliges Kennzeichnungszeichen lCSP (für: lokal Conditional Single Plane) gesetzt wird. Die Eintragungen in eine Speicherzeile der Ausgangseinrichtung für eine Verbindung mag gleichzeitig mit den Eintragungen in die Eingangseinrichtung im Zuge des Aufbaus der Verbindung erfolgen. Die Eintragungen für eine Verbindung werden im übrigen mit dem Auslösen dieser Verbindung gelöscht.

Die Verbindungen, für die das Kennzeichnungszeichen in einen aktiven Zustand, beispielsweise den logischen HIGH-Zustand, gesetzt ist, bilden eine Klasse. Ein globales Auswahlkennungszeichen rCSP (für: regional Conditional Single Plane) bezeichnet genau einen Übertragungsweg. Das globale Auswahlkennungszeichen rCSP legt den Übertragungsweg fest, von dem Nachrichtenzellen der der Klasse zugehörigen Verbindungen zur Weiterbehandlung angenommen werden.

Der Rekomoinations-Algorithmus prüft bei Ankunft einer Nachrichtenzelle zunächst, ob für die zugehörige Verbindung ein Kennzeichnungszeichen lCSP gesetzt ist. Ist ein aktives Kennzeichnungszeichen lCSP gesetzt, bleibt der Inhalt des Speicherplatzes A außer Belang und der Rekombinations-Algorithmus prüft weiter, ob die Nachrichtenzelle auf dem durch das globale Auswahlkennungszeichen rCSP bezeichneten Übertragungsweg übertragen wurde. Eine Nachrichtenzelle, die auf dem durch das globale Auswahlkennungszeichen rCSP bezeichneten Übertragungsweg übertragen wurde, wird zur Weiterbehandlung angenommen. Eine Nachrichtenzelle, die auf dem durch das globale Auswahlkennungszeichen rCSP bezeichneten Übertragungsweg nicht übertragen wurde, wird verworfen.

Bei dem anmeldungsgemäßen Verfahren werden die Nachrichtenzellen von Verbindungen, die einer Klasse zugeordnet sind, nur zur Weiterbehandlung angenommen, wenn sie von einem gerade bezeichneten Übertragungsweg übertragen wurden. Das anmeldungsgemäße Verfahren realisiert in einem Übertragungssystem mit redundanten Übertragungswegen eine verbindungsabhängige Übertragung über einen einzigen Übertragungsweg, also eine Einzelweg-Übertragung. Durch Setzen/Rücksetzen eines globalen Aktivierungszeichens rCSPEN (für: regional Conditional Single Plane Enable) ist die Einzelweg-Übertragung wirksamschaltbar bzw. deaktivierbar.

Wird das globale Auswahlkennungszeichen rCSP auf die Bezeichnung eines anderen Übertragungsweges umgeschaltet, werden Nachrichtenzellen von der Klasse zugeordneten Verbindungen ausschließlich von dem Übertragungsweg mit der aktuellen Bezeichnung angenommen. Bei dem anmeldungsgemäßen Verfahren wird also durch eine in einem einzigen Schritt ausführbare Umschaltung des globalen Auswahlkennungszeichens rCSP eine Umschaltung von einem Übertragungsweg auf einen anderen Übertragungsweg für sämtliche der Klasse zugehörigen Verbindungen bewirkt. Die Umschaltung des globalen Auswahlkennungszeichens rCSP kann mit einem Registerbefehl durch den Boardcontroller PCP erfolgen. Die Umschaltung des globalen Auswahlkennungszeichens rCSP kann als Reaktion auf ein Erreichen einer vorgegebenen Fehlerrate oder der Feststellung eines Ausfalls des gerade wirksam geschalteten Übertragungsweges erfolgen.

Mit der Umschaltung von einem Übertragungsweg auf einen anderen Übertragungsweg mag gleichzeitig ein globales Pausekennungszeichen rCSPPause (für: regional Conditional Single Plane Pause) gesetzt werden. Das Pausekennungszeichen, das nach Ablauf einer fest vorgegebenen Zeitdauer t_{Pause} zurückgesetzt wird, bewirkt für die Dauer seines Gesetztseins, daß sämtliche Nachrichtenzellen der Verbindungen, die der Klasse zugehören, verworfen werden. Dadurch wird verhindert, daß durch das Umschalten Häufungen oder Wiederholungen von Nachrichtenzellen auftreten können. Die fest vorgegebene Zeitdauer t_{Pause} mag gleich lang wie die maximal zu erwartende Laufzeitdifferenz zwischen den Übertragungswegen oder wie die Dauer eines Nachrichtenzellen-Folgezyklus sein.

Figur 3 zeigt eine prinzipielle Darstellung der Nachrichtenzellenströme bei einer Umschaltung mit einer Pause fest vorgegebenen Zeitdauer t_{Pause} von dem Übertragungsweg ASN0 auf den Übertragungsweg ASN1. Der ursprünglich von dem Übertragungsweg ASN0 übertragene Nachrichtenzellenstrom wird am unteren Rand der Figur mit Bestimmung zur Weiterbehandlung weitergeleitet. An diesen Nachrichtenzellenstrom schließt sich mit Beginn der Umschaltung eine Pause der Zeitdauer t_{Pause} an, wahrend der keine Nachrichtenzellen weitergeleitet werden. Nach Ablauf der vorgegebenen Zeitdauer wird der über den Übertragungsweg ASN1 übertragene Nachrichtenzellenstrom weitergeleitet. Der während der vorgegebenen Zeitdauer t_{Pause} auftretende Verlust von Nachrichtenzellen ist für NRT-Verbindungen ohne Echtzeitanforderung zulässig.

Alternativ zum Sperren der Durchschaltung mit Hilfe des Pausenzeichens kann eine Wiederholung bereits weitergeleiteter Zellen nach Umschaltung des Übertragungsweges vorteilhaft durch Verwendung des in der prioritätsgleichen Patentanmeldung der Anmelderin mit dem Titel "Redundantes Übertragungssystem mit Vermeidung von Zellwiederholungen" beschriebenen Algorithmus' mit Sperrfenster erfolgen.

Der Anmeldungsgegenstand wurde zwar teilweise der einfacheren und klareren Darstellbarkeit halber nur für zwei Übertragungswege dargestellt, was jedoch die vermittelte Lehre für Übertragungssysteme mit einer größeren Anzahl von Übertragungswegen nicht beschränkt.

## Patentansprüche

1. Verfahren zur Weiterleitung von Nachrichtenzellen von Verbindungen unterschiedlicher Priorität über redundante Übertragungswege, demzufolge
- über redundante Übertragungswege jeweils eine von zueinander redundanten Nachrichtenzellen übertragbar ist
- nur eine der empfangenen redundanten Nachrichtenzellen zur Weiterbehandlung ausgewählt wird
dadurch gekennzeichnet, daß
- für eine Verbindung nachrangiger Priorität ein Kennzeichnungsbit (CSP, lCSP) gesetzt wird
- eine Mehrzahl von durch ein Kennzeichnungsbit bezeichnete Verbindungen eine Klasse bilden
- bei Empfang einer Nachrichtenzelle das Kennzeichnungsbit ausgewertet wird
- ein Auswahlzustandszeichen (rCSP) den Übertragungsweg festlegt, von dem die der Klasse zugehörigen Nachrichtenzellen zur Weiterbehandlung angenommen werden.

2. Verfahren nach Anspruch 1
dadurch gekennzeichnet, daß
das Kennzeichnungsbit in jeder Nachrichtenzelle einer Verbindung nachrangiger Priorität mitgeführt wird.

3. Verfahren nach Anspruch 1
dadurch gekennzeichnet, daß
bei Empfang einer Nachrichtenzelle ein jeweiliges für die Verbindungen abgelegtes Kennzeichnungsbit (lCSP) ausgewertet wird.

4. Verfahren nach einem der vorstehenden Ansprüche
dadurch gekennzeichnet, daß
das Auswahlzustandszeichen wirksamschaltbar bzw. deaktivierbar ist.

5. Verfahren nach einem der vorstehenden Ansprüche
dadurch gekennzeichnet, daß
mit der Umschaltung von einem Übertragungsweg auf einen anderen Übertragungsweg die Annahme von Nachrichtenzellen für eine fest vorgegebene Zeitdauer ausgesetzt wird.

6. Verfahren nach einem der vorstehenden Ansprüche
dadurch gekennzeichnet, daß
bei Umschaltung von einem Übertragungsweg auf einen anderen Übertragungsweg eine Zellwiederholung von bereits zur Weiterleitung bestimmten Zellen durch Anwendung des in der prioritätsgleichen Patentanmeldung der Anmelderin mit dem Titel "Redundantes Übertragungssystem mit Vermeidung von Zellwiederholungen" beschriebenen Algorithmus eines Sperrfensters verhindert wird.

7. Verfahren nach einem der vorstehenden Ansprüche
gekennzeichnet durch
eine beliebige Kombination mit dem Algorithmus für ein Sperrfenster aus der prioritätsgleichen Patentanmeldung der Anmelderin mit dem Titel "Redundantes Übertragungssystem mit Vermeidung von Zellwiederholungen", wonach Zellen hochpriorer Verbindungen vermehrfacht über redundante Übertragungswege geleitet werden und von jeder Zelle nur eine Kopie weitergeleitet wird.
